# EUROPÄISCHE PATENTANMELDUNG

(11) **EP 1 132 693 A2**
(43) Veröffentlichungstag der Anmeldung: **12.09.2001**
(21) Anmeldenummer: 00126686.5
(22) Anmeldetag: 05.12.2000
(51) Int. Cl.: F24J 2/54

(54) **Sonnenkollektor**

(30) Priorität: 28.01.2000 DE 10003826
(71) Anmelder: Globe Thermal Energy AG, 41836 Hückelhoven (DE)
(72) Erfinder: Grandl, Margot, 83564 Soywn (DE); Pommerenke c/o Edith Pomerenke,, 85604 Zorneding (DE)
(74) Vertreter: Kluin, Jörg-Eden, Dr. Dipl.-Phys.

(57) **Zusammenfassung**

Sonnenkollektor mit 2 oder mehreren Absorberflächen, die zum Sonnenstand ausrichtbar sind, dadurch gekennzeichnet, dass die Absorberflächen auf einer Pyramide montiert sind.

## Beschreibung

Es ist bekannt, daß die einzelnen Sonnenkollektoren, entweder auf den Hausdächern mit unterschiedlichen Winkelmaßen und Himmelsrichtungen an den Hauswänden in senkrechter oder schräger Anordnung oder auch freistehend montiert werden.

In Sonderanfertigungen gibt es auch Sonnenkollektoren mit automatischer Sonnenausrichtung, welche sich zwar zur jeweiligen Himmelsrichtung nach dem Sonnenstand ausrichten, aber nicht in der Lage sind dem bogenförmigen Verlauf der Sonne zu folgen.

Jede dieser Aufstellungs- und Anordnungsarten stellt einen Kompromiß in baulicher, optischer und auch technischer Hinsicht dar. Vor allem ist es immer schwierig, die Anordnung entsprechend der idealen Himmelsrichtung einzuhalten.

### Allgemeine Aufgabe:

Optimierung der Sonneneinstrahlung auf die Absorberflächen. Die Aufgabe wird durch die im Patentanspruch 1 angegebenen Merkmale gelöst.

Die Erfindung stellt in sich ein eigenständiges Gebilde dar, welches mit einfachen Mitteln nach den Himmelsrichtungen ausgerichtet werden kann.

Flachdächer aller Art oder auch Garten- oder Hofflächen können als Standort dienen.

Der Innenraum kann als Wintergarten, Sommerlaube oder auch anderweitig (z. B. als Technikraum) genutzt werden.

### Erreichte Vorteile:

a) maximale Nutzung der einfallenden Sonnenenergie;
b) Nutzung als Wintergarten oder sonstige Nutzung als Innenraum;
c) gute optische Einbindungsmöglichkeiten in das Gesamtbild von Gebäuden;
d) bei Industrieanlagen kann durch Öffnen der Absorberflügel zusätzlich eine Be- und Entlüftung erreicht werden;
e) bei Ausstattung mit entsprechenden Absorbern auch zur Wärmerückgewinnung geeignet;
f) aufgrund der mehrfachen Nutzungsmöglichkeiten (z. B. Wintergarten oder sonstiges) kostengünstigere Ausführung gegenüber herkömmlichen Bauweisen.

### Weitere Merkmale:

Beim Aufklappen der bewegten Absorberteile an der Ost- bzw. Westseite kann
- eine Öffnung entstehen, die man je nach Jahreszeit und Nutzungsart zum Be- bzw. Entlüften verwendet;
- eine Öffnung entstehen, die man durch ein lichtdurchlässiges Material (z. B. Schiebefenster) unabhängig von der Stellung der Absorberflächen schließt.

Durch Anbringen von Regen- und Windsensoren wird ein bedarfsweises Schließen der bewegten Absorberflächen bewirkt. Außerdem ist ein Schließen über Temperatursteuerung möglich.

Die bisherige Beschreibung stellt einen pyramidenförmigen Sonnenkollektor in seiner kleinstmöglichen, sinnvollen Ausführung dar. Die Absorberflächen betragen an der Ost-, Süd- und Westseite je 2m². Jede andere Baugröße ist entsprechend der erforderlichen Nutzungsart möglich.

### Ausführungsbeispiele:

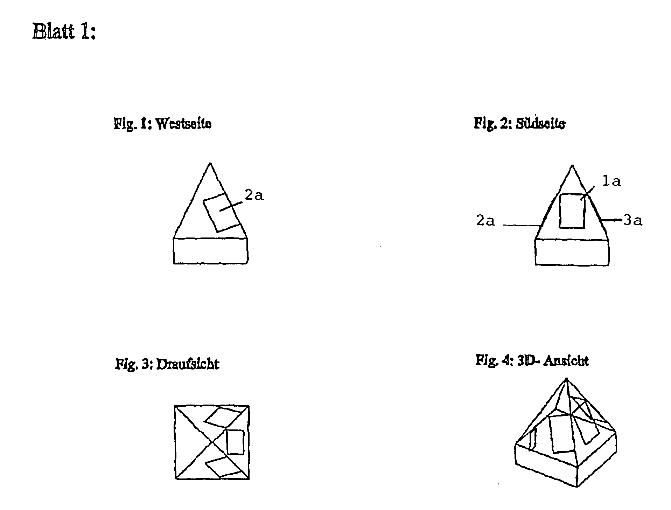

Fig. 1 stellt die Westseite dar:

Die Absorberfläche 2a folgt hier dem Sonnenverlauf, sie wird an der Kante der Pyramide befestigt und um diese geschwenkt. Die Kante dient als Drehachse. Die schräge Anordnung bewirkt den bogenförmigen Verlauf. Die restliche Fläche kann wieder mit Gläsern aller Art oder sonstigen lichtdurchlässigen Bauteilen ausgestattet werden. An der Ostseite sind die baulichen Anordnungen identisch. Hier befindet sich die Absorberfläche 3a.

Fig. 2 stellt die Südseite dar:

Hier ist die Absorberfläche 1a fest montiert. Auf der restlichen Fläche können Verglasungen aller Art, lichtdurchlässige Materialien oder Photovoltaik-Kollektoren in lichtdurchlässiger Ausführung angebracht werden. In dieser Form ergibt sich der Vorteil, daß bei der Nutzung als Sommerlaube oder Wintergarten die Sonnenstrahlen absorbiert werden und somit der Aufenthalt für Mensch und Tier unschädlich ist und auch die Pflanzen nicht geschädigt werden.

Fig. 3 zeigt die Draufsicht:

Hier wird auch die Nordseite abgebildet, an der sich keine Absorberfläche befindet. An der Nordseite ist in jedem Fall ein 100 % lichtdurchlässiges Material zu verwenden.

Fig. 4 stellt die 3D-Ansicht dar:

Diese Ansicht zeigt den Sockel der Pyramide, an deren Nordseite sich der Eingang befinden kann. Der Sockel kann als Wintergarten oder Sommerlaube dienen.

Hierzu als Anlage 1 Blatt Zeichnungen.

## Patentansprüche

1. Sonnenkollektor mit 2 oder mehreren Absorberflächen, die zum Sonnenstand ausrichtbar sind, **dadurch gekennzeichnet, dass** die Absorberflächen auf einer Pyramide montiert sind.

2. Sonnenkollektor nach Anspruch 1, **dadurch gekennzeichnet, dass** Absorberflächen bewegbar sind.

3. Sonnenkollektor nach Anspruch 1, **dadurch gekennzeichnet, dass** die Absorberflächen fest montiert sind.

4. Sonnenkollektor nach einem der Ansprüche 1 bis 3, **dadurch gekennzeichnet, dass** der Innenraum der Pyramide als Wintergarten, Sommerlaube oder Sonstiges nutzbar ist.

5. Sonnenkollektor nach einem der Ansprüche 1 bis 4, **dadurch gekennzeichnet, dass** die durch die Absorberflächen nicht abgedeckte Fläche durch den Einbau von Photovoltaik genutzt wird.
